# EUROPÄISCHE PATENTSCHRIFT

(11) **EP 2 136 959 B1**
(45) Veröffentlichungstag und Bekanntmachung des Hinweises auf die Patenterteilung: **25.05.2011**
(21) Anmeldenummer: 08735120.1
(22) Anmeldetag: 10.04.2008
(51) Int. Cl.: B23K 26/10, B29C 65/16

(54) **SPANNVORRICHTUNG ZUM SPANNEN MINDESTENS ZWEIER BAUTEILE**
CLAMPING DEVICE FOR CLAMPING AT LEAST TWO COMPONENTS
DISPOSITIF TENDEUR POUR TENDRE AU MOINS DEUX ÉLÉMENTS

(30) Priorität: 17.04.2007 DE 102007018385; 07.09.2007 DE 102007042739
(43) Veröffentlichungstag der Anmeldung: 30.12.2009
(73) Patentinhaber: LPKF Laser & Electronics AG, 30827 Garbsen (DE)
(72) Erfinder: BRUNNECKER, Frank, 96117 Memmelsdorf (DE); ALDEBERT, Holger, 90513 Zirndorf (DE); KRAUS, Andreas, 90765 Fürth (DE)
(74) Vertreter: Hübner, Gerd
(86) Internationale Anmeldenummer: PCT/EP2008/002808
(87) Internationale Veröffentlichungsnummer: WO 2008/125263

(56) Entgegenhaltungen:
- US-A- 5 049 720

## Beschreibung

Die Erfindung betrifft eine Spannvorrichtung zum Spannen mindestens zweier Bauteile in einer strahlgestützten Bearbeitungsmaschine, insbesondere in einer Laserschweißeinrichtung.

Derartige Spannvorrichtungen sind aus einer Vielzahl von Druckschriften bekannt. So zeigt die DE 199 24 469 A1 eine Schweißhalterung für Werkstücke insbesondere zum Laser-Durchstrahlschweißen von Fügeflächen aus Kunststoff, bei der die Fügeflächen an an dem zweiteiligen Werkstück umlaufenden Randflanschen ausgebildet sind. Das eine Werkstück ist von einer Aufnahme zur Lagerung dieses Bauteils gehalten. Das zweite Bauteil wird über einen Spannkopf beaufschlagt, der außenseitig um die eigentliche Schweißlinie zum Einbringen von Spanndruck in die Fügefläche gehalten wird.

Bei der Schweißeinrichtung gemäß DE 195 10 493 A 1 wird über hydraulik sche, pneumatische, rollenartige oder anderweitige Niederhalter eine Druckeinwirkung vorgenommen. Explizit ist dabei eine Andruckrolle offenbart, die benachbart zum Bearbeitungs-Laserstrahl entlang der Bestrahlungszone mitläuft. Ein großer Nachteil dieses Verfahrens ist, dass durch die Bewegung der Andruckrolle eine tangentiale Kraft in Bewegungsrichtung der Rolle aufgebracht wird. Diese verursacht Spannungen im durchstrahlten Fügepartner. Außerdem kann durch die auf der Bauteiloberfläche aufsetzende Andruckrolle eine Beschädigung der Oberfläche verursacht werden.

Die US 5 049 720 A zeigt eine Laserschweißeinrichtung für den Deckel eines Kunststoffbehälters, bei der der Deckel im Bereich der Schweißnaht durch eine doppelringförmige Spannbacke auf den Behälterflansch gedrückt wird. Der Spalt zwischen beiden Spannringen ist dabei durch eine durchgehende transparente Scheibe abgedeckt, sodass der darunter befindliche Bereich bei Beaufschlagung des Deckels abgedichtet und zusätzlich unter Überdruck setzbar ist. Damit soll ein gleichmäßiges Anliegen des Deckels am Behälter erreicht werden. Die Laserstrahlung tritt dabei durch das Fenster und den Spalt zwischen den beiden Ringen durch und trifft auf die Schweißzone auf. Der Spanndruck wird dabei über einen zentral über dem Werkstück sitzenden Druckzylinder eingebracht. Diese Anordnung ist damit für kleinere zu verschweißende Bauteile nicht geeignet.

Zum Hintergrund der Erfindung ist kurz auf deren vornehmliches Anwendungsgebiet einzugehen, nämlich das so genannte Durchstrahlschweißen. Dabei wird das Einbringen der erforderlichen Laserleistung in die Fügezone dadurch erzielt, dass der Laserstrahl durch eine für den Laserwellen-Längenbereich völlig beziehungsweise zumindest teilweise transparente Decklage des einen Bauteils durchstrahlt wird. Die Laserenergie wird vom unteren Fügepartner zumindest teilweise absorbiert. Die dabei entstehende Wärme lässt den unteren Fügepartner aufschmelzen, durch Wärmeleitung aus dem zweiten Bauteil in die Decklage wird also auch das erste Bauteil aufgeschmolzen. Eine Verbindung der beiden Fügepartner findet durch Druckeinwirkung auf die Fügezone statt. Der Laserstrahl bewegt sich dabei relativ entlang der Schweißnaht.

Zum Erzeugen der Druckeinwirkung zeigt die den nächstkommenden Stand der Technik repräsentierende DE 199 24 469 A 1 eine Außenspannvorrichtung, bei der der gegenseitige Spanndruck auf die Fügepartner einseitig der Schweißnaht aufgebracht wird. Dies führt zu einer einseitigen Belastung des zu durchstrahlenden Fügepartners entlang der Schweißnaht, was für die Schweißnahtqualität nachteilig ist. Die Druckverteilung nimmt nämlich in Richtung der Schweißnaht ab und kann eine außenseitige Verformung des Bauteils bewirken. Damit können Spannungen im Kunststoffgefüge entstehen, die nach dem Erstarren der Schmelze zu Rissen in oder neben der Schweißnaht führen können.

Ferner ist die Außenspannvorrichtung dann problematisch anzuwenden, wenn außerhalb der Schweißnaht an den Bauteilen kein oder nicht ausreichend Material zum Ansetzen der Außenspannvorrichtung vorhanden ist.

Der Erfindung liegt nun ausgehend von der geschilderten Problematik zum Stand der Technik die Aufgabe zugrunde, eine Spannvorrichtung der gattungsgemäßen Art so auszubilden, dass zwei zu fügende Bauteile unabhängig von ihren Dimensionen universell zu spannen sind, sodass auf die problematische Außenspanntechnik gegebenenfalls ganz verzichtet werden kann.

Diese Aufgabe wird durch die Vorrichtung gemäβ Patentanspruches 1 gelöst

Die Erfindung schlägt also eine Innenspanntechnik vor, die bei strahlgestützten Bearbeitungsmaschinen bisher wegen der durch die innen liegenden Spannteile verbundene Abschattung nicht eingesetzt wurde. Die Erfindung geht in diesem Zusammenhang von der Erkenntnis aus, dass geringe Unterbrechungen des Bearbeitungsstrahles, wie sie durch die schmalen Verbindungsstreben zur Anbindung des Innen-Spannbackens an den außenliegenden Spannkopf nur auftreten, mit keiner nennenswerten Beeinträchtigung der Schweißnaht verbunden sind. Aufgrund der auch in Längsrichtung der Schweißnaht stattfindenden Wärmeleitung sowie einer teilweise stattfindenden Bestrahlung werden auch die von den Verbindungsstreben abgeschatteten Bereiche ausreichend mit Energie versorgt, sodass ein einwandfreies Aufschmelzen und Verschweißen der beiden Fügepartner erreicht wird.

Durch die erfindungsgemäße Innenspannung insbesondere in Kombination mit der bevorzugtermaßen vorgesehenen Außenspannung ergibt sich für die gesamte Schweißnaht eine deutlich homogenere Spanndruckverteilung, was zu geringeren Spannungen in und neben der Schweißnaht führt. Dadurch wird die Schweißnahthomogenität verbessert, wodurch gegebenenfalls mit einer geringeren Laserleistung gewünschte Schweißergebnisse erzielbar sind. Damit können dann auch Taktzeitverkürzungen bei der Bearbeitung von Werkstücken einher gehen.

Gemäß einer vorteilhaften Weiterbildung ist vorgesehen, zur Spannung dreidimensionaler Bauteile die Innenspannung durch eine Vielzahl von einzelnen Innenspannbacken vorzunehmen, die jeweils an außenliegenden, einzelnen Spannköpfen über die den Strahlweg überbrückenden Verbindungsstreben angebracht sind. Vorzugsweise sind die Innenspannbacken mit den Verbindungsstreben Teil jeweils eines Spannhebels, der mittels eines Spannantriebes, beispielsweise in Form eines Kolben-Zylinder-Antriebes, beaufschlagbar ist.

Bevorzugte Ausführungsformen, weitere Merkmale, Einzelheiten und Vorteile der Erfindung ergeben sich aus den abhängigen Ansprüchen und der nachfolgenden Beschreibung von Ausführungsbeispielen anhand der beigefugten Zeichnungen. Es zeigen:
- Fig. 1: eine perspektivische Darstellung einer Laserschweißeinrich- tung mit einer Spannvorrichtung,
- Fig. 2: eine Seitenansicht der Anordnung gemäß Fig. 1,
- Fig. 3: eine Draufsicht einer Spannvorrichtung mit Innenspannung eines Werkstücks,
- Fig. 4 und 5: Schnittdarstellungen der Spannvorrichtung gemäß Schnittli- nie IV-IV beziehungsweise V-V nach Fig. 3,
- Fig. 6: eine Draufsicht einer Spannvorrichtung mit kombinierter In- nen- und Außenspannung,
- Fig. 7 und 8: Schnittdarstellungen der Spannvorrichtung gemäß Schnittli- nie VII-VII beziehungsweise VIII-VIII nach Fig. 6, sowie
- Fig. 9 und 10: eine Seitenansicht und Draufsicht einer weiteren Ausfüh- rungsform einer aus einzelnen Spannbacken zusammenge- setzten Innenspannvorrichtung.

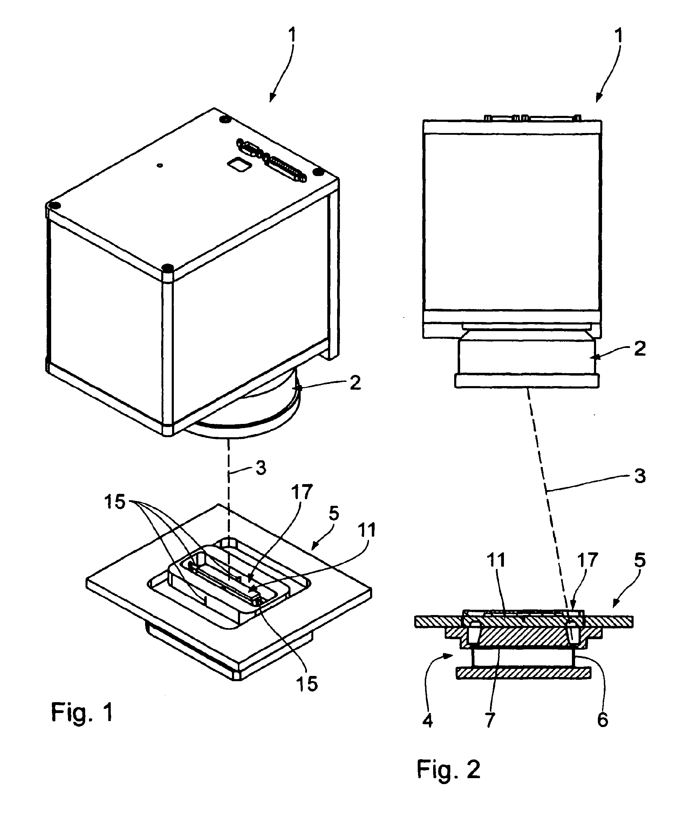

Wie aus den Fig. 1 und 2 deutlich wird, weist eine Laserschweißeinrichtung einen als Ganzes mit 1 bezeichneten Laserschweißkopf auf, der in seinem Aufbau dem Stand der Technik entspricht und insoweit nicht näher erläutert werden muss. Der Laserschweißkopf 1 kann als Scannersystem oder als beweglicher Konturschweißkopf aufgebaut sein.

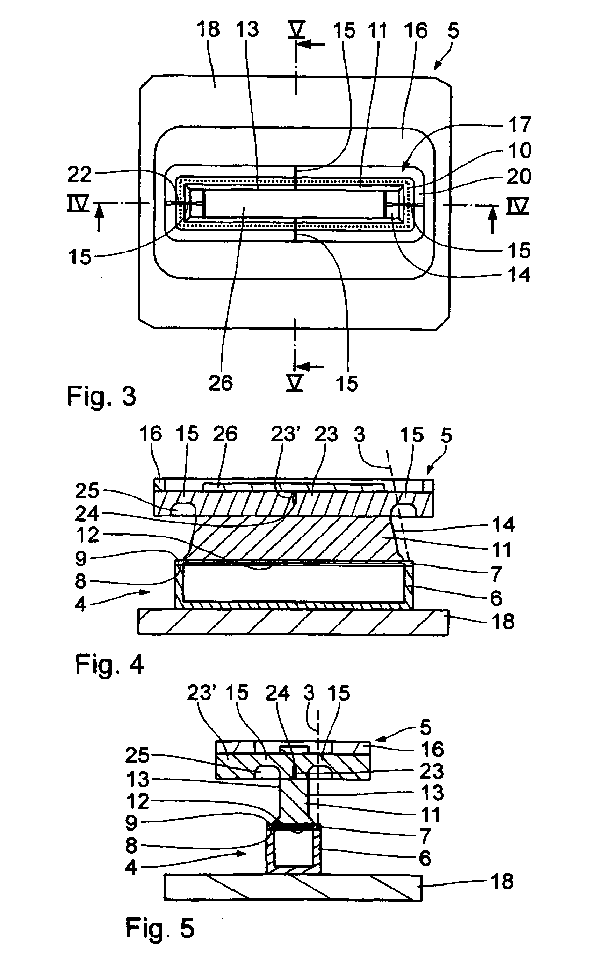

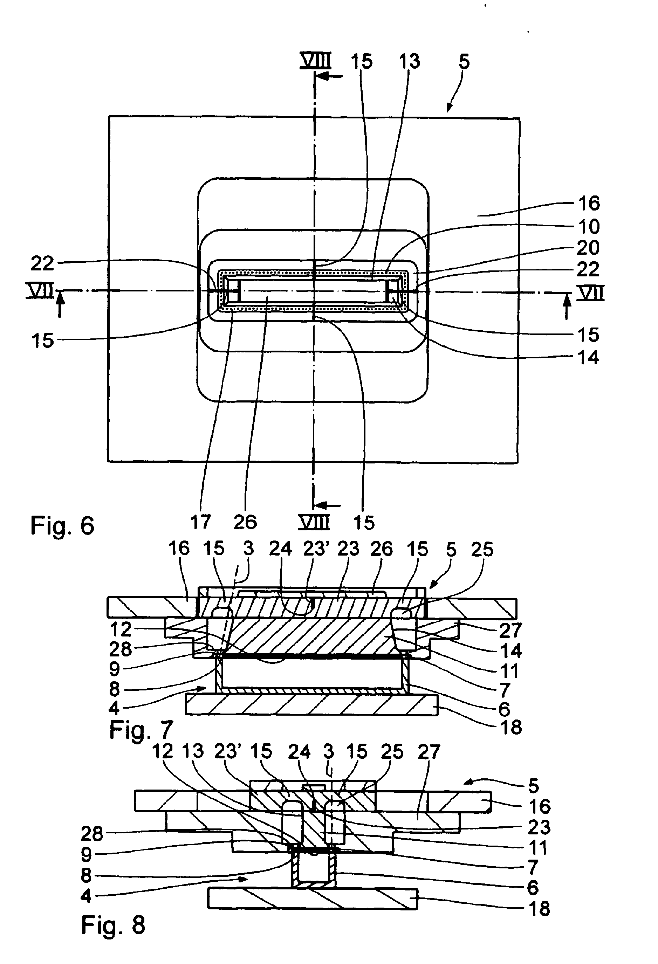

Über eine Bearbeitungsoptik 2 wird der in Fig. 2 gestrichelt eingezeichnete Laserstrahl 3 über einen definierten Strahlweg 10 (siehe Fig. 3 und 6) zur Bearbeitung des in der noch näher zu erläuternden Spannvorrichtung 5 gehaltenen Werkstückes 4 geführt.

Anhand von Fig. 3 bis 5 ist der Aufbau einer Spannvorrichtung 5 für eine reine Innenspannung des Werkstücks 4 zu erläutern. Das Werkstück 4 besteht aus zwei Bauteilen, nämlich einem quaderförmigen, oben offenen Unterteil 6 und einem darauf sitzenden, bündig mit den Außenwänden des Unterteils 6 abschließenden Deckel 7. Letzterer besteht aus einem für die Wellenlänge des Laserstrahls 3 transmissiven, thermoplastischen Kunststoffmaterial, wogegen das Unterteil 6 aus einem den Laserstrahl absorbierenden und in Wärme umwandelnden Material gefertigt ist. Insoweit kann der Laserstrahl 3 durch den Deckel 7 hindurchtreten und in der durch den Deckel-Unterrand 8 und die nach oben weisende Stirnkante 9 des Unterteils 6 gebildeten Fügezone für ein Verschmelzen der beiden Bauteile 6, 7 im oben erwähnten Durchstrahl-Schweißverfahren sorgen.

Zur Spannung beider Bauteile 6, 7 ist das Unterteil 6 in einer WerkstückAufnahme 18 gehalten. Für den Deckel 7 ist eine Innenspannung mit einem Innen-Spannbacken 11 vorgesehen, der innerhalb des in Fig. 3 und 6 punktiert angedeuteten Strahlweges 10 angeordnet ist. Der Innen-Spannbacken 11 ist über jeweils mittig in den Längs- und Querseiten 13, 14 am oberen Ende sitzende Verbindungsstreben 15 mit dem in den Fig. 3 bis 5 lediglich in Form eines Spannringes angedeuteten Spannkopf 16 angebunden. Diese Verbindungsstreben 15 überbrücken den den Strahlweg 10 des Laserschweißkopfes 1 zu den Bauteilen 6, 7 freigebenden Durchtrittsspalt 17 im Spannkopf.

Sie sind, wie insbesondere aus Fig. 3 deutlich wird, lamellenförmig ausgebildet, wobei ihre flache Hauptebene im Wesentlichen parallel zur Richtung des Laserstrahls 3, also vertikal ausgerichtet ist. Ferner liegt diese Hauptebene rechtwinklig zum Strahlweg 10, sodass der Laserstrahl 3 nur minimal abgeschattet wird. Für spezielle Anwendungen kann auch eine schräge Anordnung der Verbindungsstreben angezeigt sein.

Die Form der Spannfläche 12 des Innen-Spannbackens 11 ist - wie aus den Fig. 4 und 5 hervorgeht, an die Form des Deckels 7 und damit der anzulegenden Schweißnaht in der Fügezone zwischen Deckelunterrand 8 und Stirnkante 9 des Unterteils 6 angepasst. Damit kann der über den Spannkopf 16 eingeleitete Spanndruck sauber verteilt über den Deckel 7 auf das Unterteil 6 übergeleitet werden, dass von der Werkstückaufnahme 18 gegengehalten wird.

Wie ferner aus den Fig. 3 bis 5 hervorgeht, sind die zum Durchtrittspalt 17 hin gewandten Flächen des Innen-Spannbackens 11 an den schmalen Querseiten 14 und die entsprechende Fläche 20 des Spannkopfes 16 entgegen der Strahlrichtung geneigt, sodass sich der Durchtrittsspalt 17 gegen die Strahlrichtung des Laserstrahls 3 konisch erweitert. Damit kann der Laserstrahl 3 auch bei einem flacheren Winkel, wie er beim Anlegen der Schweißnaht im Bereich der Schmalseiten herrscht, ungehindert zur Fügezone durchtreten.

Aus der Draufsicht gemäß Fig. 3 sind bei den beiden die Schmalseiten überbrückenden Verbindungsstreben 15 in deren Flachseiten Aussparungen 22 erkennbar, die zur Anpassung der Form der Verbindungsstreben 15 an die Strahlkaustik des Laserstrahls 3 dienen.

Wie aus den beiden Schnittdarstellungen gemäß den Fig. 4 und 5 hervorgeht, sind die jeweils in einer Linie verlaufenden, einander abgewandten Verbindungsstreben 15 an einem gemeinsamen, streifenförmigen Metallblech 23, 23' ausgebildet, die über den gesamten Innen-Spannbacken 11 hinweg verlaufen und sich zentral in einer Ausklinkung 24 kreuzen. An ihrem äußeren Enden sind die beiden Metallbleche 23, 23' jeweils in dem ringartigen Spannkopf 16 verankert. Im Durchtrittsspalt 17 weisen die Metallbleche 23, 23' ferner an ihrer Unterkante Aussparungen 25 auf, sodass bei schräg zur Ebene der Metallbleche 23, 23' verlaufenden Laserstrahlen 3 das Maß der Abschattung wiederum minimiert wird. Oben am InnenSpannbacken 11 werden die beiden Metallbleche 23, 23' mittels eines Deckels 26 gehalten.

Bei der in den Fig. 6 bis 8 gezeigten Ausführungsform einer Spannvorrichtung ist die Innenspannung gegenüber dem Ausführungsbeispiel gemäß Fig. 3 bis 5 quasi unverändert. Übereinstimmende Bauteile sind mit identischen Bezugszeichen versehen und bedürfen keiner weiteren Erläuterung.

Im Unterschied zu den Fig. 3 bis 5 ist bei der Ausführungsform gemäß Fig. 6 bis 8 zusätzlich in Kombination mit der Innenspannung eine Außenspannung vorgesehen, die durch eine am Spannkopf 16 unten angebrachte Spannbrille 27 realisiert ist. Diese greift von außen an das Werkstück 4 an und beaufschlagt mit einem innenseitig in der Spannöffnung umlaufenden Fixiersteg 28 den Rand des Deckels 7 von oben. Zusammen mit der erläuterten Innenspannung wird hier also die Fügezone zwischen Deckelunterrand 8 und Stirnkante 9 des Unterteils 6 beiderseits des Strahlweges 10 gespannt.

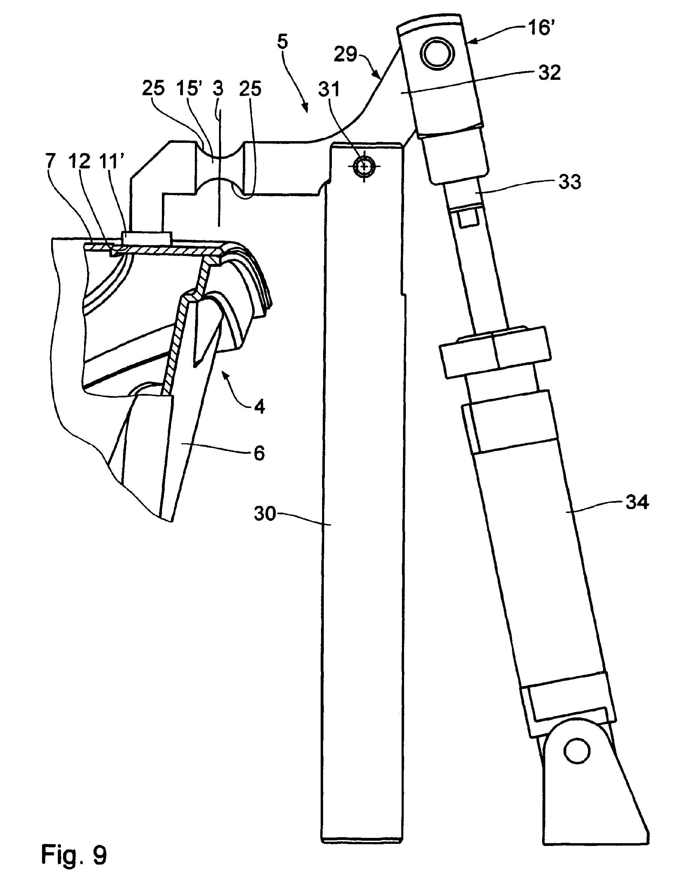

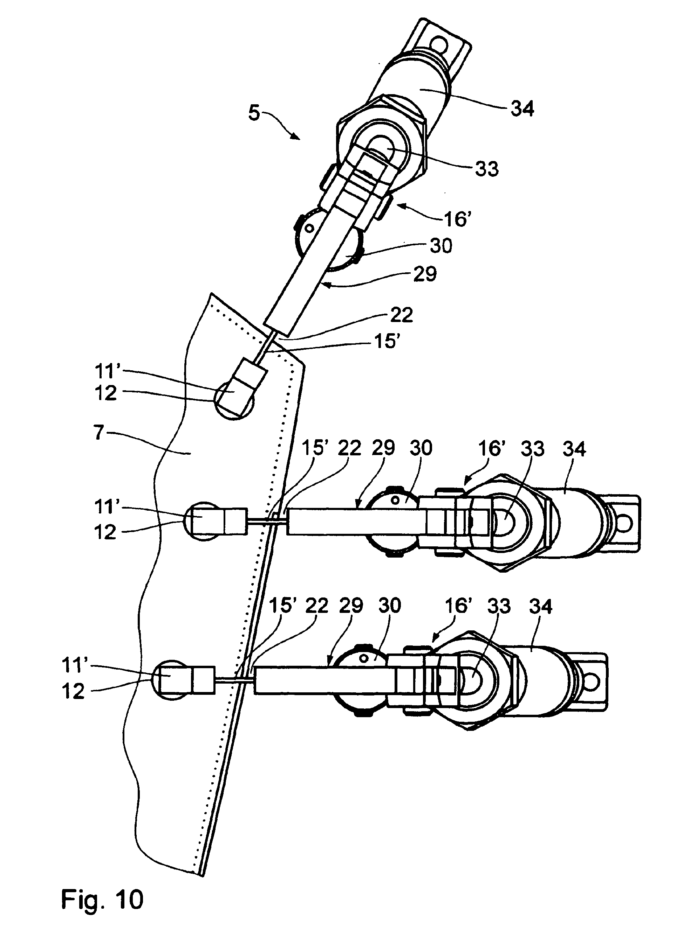

In den Fig. 9 und 10 ist eine Innenspannvorrichtung gezeigt, bei der für die Spannung eines Deckels 7 auf einem Unterteil 6 eine Vielzahl von Innenspannbacken 11' zum Einsatz kommen. Diese sind wiederum über schmale, stegartige Verbindungsstreben 15' mit den außenliegenden Spannköpfen 16' der Spannvorrichtung verbunden. Mit diesen Verbindungsstreben 15', die in Draufsicht (Fig. 10) durch seitliche Aussparungen 22 der Spannhebel 29 gebildet sind, wird der Strahlweg 10 des Laserstrahls 3 überdrückt. Ferner erfolgt eine Anpassung der Verbindungsstege 15' an die Strahlkaustik durch ihre oberen und unteren Aussparungen 25.

Die Spannhebel 29 selbst sind an außerhalb der nicht näher gezeigten Werkstückaufnahme angeordneten Stützen 30 in einer Drehachse 31 schwenkbar gelagert. An seinem den Innenspannbacken 11' abgewandten, nach oben abgekröpften Hebelarm 32 ist jeweils die Kolbenstange 33 eines Kolben-Zylinder-Antriebes 34 angelenkt. Mit Hilfe dieses Kolben-Zylinder-Antriebes 34 kann jeder einzelne Innen-Spannbacken 11' so beaufschlagt werden, dass er das zu spannende Bauteil, nämlich den Deckel 7 von oben innerhalb der zu erzeugenden Schweißnaht entlang des Strahlweges 10 der Laserschweißeinrichtung gegen das Unterteil 6 beaufschlagt. Durch Zurückziehen der Kolbenstange 33 können die Innenspannbacken 11' nach oben weggeschwenkt und somit das Werkstück 4 aus der Laserschweißeinrichtung entnommen werden.

Wenngleich aufgrund der stegartigen Verbindungsstreben 15' die Abschattung des Laserbearbeitungsstrahles so gering ist, dass eine Beeinträchtigung der herzustellenden Schweißnaht nicht zu befürchten steht, kann für besonders hohe Qualitätsanforderungen selektiv jeweils derjenige Spannbacken 11' mit Hilfe des Kolben-Zylinder-Antriebes 34 nach oben weggeschwenkt werden, der gerade im Strahlweg liegt.

Zu allen vorstehend erörterten Ausführungsbeispielen ist im Übrigen abschließend festzuhalten, dass der Spanndruck auch durch eine Beaufschlagung der Werkstückaufnahme von unten und damit eine Gegenfahren des zu spannenden Bauteils gegen den ein- oder mehrteiligen Innenspannbacken 11, 11' bewerkstelligt werden kann. Dann entfallen beispielsweise die Kolben-Zylinder-Antriebe 34 der Ausführungsform gemäß den Fig. 9 und 10.

## Patentansprüche

1. Spannvorrichtung zum Spannen mindestens zweier Bauteile (6, 7) in einer einen Arbeitsstrahl (3) einsetzenden Bearbeitungsmaschine, insbesondere in einer Laserschweißeinrichtung (1), mit
- einer Aufnahme (18) zur Lagerung des ersten Bauteils (6), und
- mindestens einem Spannkopf (16), an dem jeweils ein Spannbacken zur Beaufschlagung des zweiten Bauteils (7) zum Einbringen von Spanndruck in die Fügefläche (8, 9) zwischen den beiden Bauteilen (6, 7) angeordnet ist, **dadurch gekennzeichnet, dass**
- der jeweilige Spannbacken als innerhalb des umlaufenden Strahlweges (10) des Arbeitsstrahls (3) der Bearbeitungsmaschine angeordneter InnenSpannbacken (11, 11') mit einer Spannfläche (12) zum Innenspannen der Bauteile (6, 7) ausgebildet ist,
- ein Durchtrittsspalt (17) für den Arbeitsstrahl (3) den jeweiligen Innenspannbacken (11, 11') vom außenliegenden Spannkopf (16) trennt, und
- mindestens eine schmale Verbindungsstrebe (15, 15') zur Anbindung des Innen-Spannbackens (11, 11') an den außenliegenden Spannkopf (16, 16') vorgesehen ist, welche mindestens eine Verbindungsstrebe (15, 15') den den Strahlweg (10) der Bearbeitungsmaschine zu den Bauteilen (6, 7) freigebenden Durchtrittsspalt (17) überbrückt.

2. Spannvorrichtung nach Anspruch 1, **dadurch gekennzeichnet, dass** die Verbindungsstreben (15, 15') lamellenförmig ausgebildet sind, wobei ihre flache Hauptebene im Wesentlichen parallel zur Richtung des Bearbeitungsstrahls (3) der Bearbeitungsmaschine ausgerichtet ist.

3. Spannvorrichtung nach Anspruch 1 oder 2, **dadurch gekennzeichnet, dass** die Spannfläche (12) des Innen-Spannbackens (11, 11') parallel zur Fügefläche (8, 9) verläuft.

4. Spannvorrichtung nach einem der vorgenannten Ansprüche, **dadurch gekennzeichnet, dass** der Durchtrittsspalt (17) gegen die Richtung des Bearbeitungsstrahls (3) der Bearbeitungsmaschine konisch erweitert ist.

5. Spannvorrichtung nach einem der vorgenannten Ansprüche, **dadurch gekennzeichnet, dass** die Form der Verbindungsstreben (15, 15') der Strahlkaustik des Bearbeitungsstrahls (3) angepasst ist.

6. Spannvorrichtung nach einem der vorgenannten Ansprüche, **dadurch gekennzeichnet, dass** der Spannkopf (16) mit einem außerhalb des umlaufenden Strahlweges (10) der Bearbeitungsmaschine angeordneten Außen-Spannbacken (27) mit einer Spannfläche (28) zum Außenspannen der Bauteile (6, 7) versehen ist.

7. Spannvorrichtung nach einem der vorgenannten Ansprüche, **dadurch gekennzeichnet, dass** Innen- und/oder Außenspannbacken (11, 11', 27) mehrteilig aufgebaut sind.

8. Spannvorrichtung nach einem der vorgenannten Ansprüche, **dadurch gekennzeichnet, dass** die Verbindungsstreben (15) zur Halterung des Innen-Spannbackens (11) an zwei sich kreuzenden, in den InnenSpannbacken (11) eingebettenen Metallblechstreifen (23, 23') ausgebildet sind.

9. Spannvorrichtung mindestens nach Anspruch 1, **dadurch gekennzeichnet, dass** insbesondere zur Spannung dreidimensionaler Bauteile eine Vielzahl von einzelnen Innenspannbacken (11') jeweils an außen liegenden, einzelnen Spannköpfen (16') über die Verbindungsstreben (15') angebracht sind.

10. Spannvorrichtung nach Anspruch 9, **dadurch gekennzeichnet, dass** die Spannköpfe (16') jeweils die Verbindungsstreben (15') haltende Spannhebel (29) aufweisen, die mittels eines Spannantriebes, vorzugsweise mittels eines Kolben-Zylinder-Antriebes (34) beaufschlagbar sind.

## Claims

1. Clamping apparatus for clamping at least two component parts (6, 7) in a machine tool using a work beam (3), in particular a laser welding device (1), comprising
- a carrier (18) for mounting the first component (6), and
- at least one clamping chuck (16) on which a respective clamping fixture is arranged for fixing the second component (7) to bring clamping pressure to the joining face (8, 9) between both of the components (6, 7), **characterized in that**
- the respective clamping fixture is designed as an inner clamping fixture (11, 11') placed within the circulating beam path (10) of the work beam (3) of the machine tool having a clamping surface (12) for the inner clamping of the components (6, 7),
- a gap (7) for the work beam (3) separates the respective inner clamping fixture (11, 11') from the outer clamping chuck (16), and
- at least one narrow connecting strut (15, 15') is provided for connecting the inner clamping fixture (11, 11') to the outer clamping chuck (16, 16'), which at least one connecting strut (15, 15) bridges the gap (17) releasing the beam path (10) of the machine tool to the components (6, 7).

2. Clamping apparatus according to claim 1 **characterized in that** the connecting struts (15, 15') are fin-shaped, whereby the flat principal plane runs essentially parallel to the direction of the machine's laser beam (3).

3. Clamping apparatus according to claim 1 or 2 **characterized in that** the clamping area (12) of the inner clamping fixture (11, 11') runs parallel to the faying surface (8, 9).

4. Clamping apparatus according to one of the aforementioned claims **characterized in that** the gap (17) extends conically (3) in the opposite direction of the machine's beam (3).

5. Clamping apparatus according to one of the aforementioned claims **characterized in that** the shape of the connecting struts (15, 15') is adapted to the caustic of the laser beam (3).

6. Clamping apparatus according to one of the aforementioned claims **characterized in that** the clamping chuck (16) have an outer clamping fixture (27) placed outside of the circulating beam path (10) of the machine with a clamping surface (28) for outer clamping of the components (6, 7).

7. Clamping apparatus according to one of the aforementioned claims **characterized in that** inner and/or outer clamping fixtures (11, 11', 27) are made up of multiple parts.

8. Clamping apparatus according to one of the aforementioned claims **characterized in that** the connecting struts (15) that make up the inner clamping fixture's mount (11) are built on two crossing sheet metal strips (23, 23') embedded in the inner clamping fixture (11).

9. Clamping apparatus at least according to claim 1, **characterized in that** in particular for the clamping of three-dimensional components a plurality of individual inner clamping fixtures (11') are each arranged on outer, individual clamping chucks (16') by the connecting struts (15').

10. Clamping device according to claim 9, **characterized in that** the clamping chucks (16') each comprise clamping levers (29) holding the connecting struts (15'), which, by means of a clamping drive, are preferably chargeable by means of a piston cylinder drive (34).

## Revendications

1. Dispositif tendeur pour tendre au moins deux éléments (6, 7) dans une machine d'usinage utilisant un faisceau de travail (3), en particulier dans un dispositif de soudage au laser (1), comprenant
- un logement (18) pour le logement du premier élément (6), et
- au moins une tête tendeuse (16), sur laquelle respectivement une mâchoire de serrage destinée à solliciter le second élément (7) est disposée pour l'introduction de la pression de serrage dans la surface d'assemblage (8, 9) entre les deux éléments (6, 7),
**caractérisé en ce que**
- la mâchoire de serrage respective est réalisée comme une mâchoire de serrage intérieur (11, 11') disposée dans la course rotative (10) du faisceau de travail (3) de la machine d'usinage, avec une surface de serrage (12) pour le serrage intérieur des éléments (6, 7),
- une fente de passage (17) pour le faisceau de travail (3) sépare la mâchoire de serrage interne (11, 11') respective de la tête tendeuse (16) extérieure, et
- au moins une étroite entretoise de liaison (15, 15') est prévue pour la liaison de la mâchoire de serrage intérieur (11, 11') avec la tête tendeuse extérieure (16, 16'), l'entretoise de liaison (15, 15') recouvrant la fente de passage (17) libérant la course du faisceau (10) de la machine d'usinage vers les éléments (6, 7).

2. Dispositif tendeur selon la revendication 1, **caractérisé en ce que** les entretoises de liaison (15, 15') sont réalisées de manière lamellaire, leur plan principal plat étant orienté sensiblement parallèlement au sens du faisceau d'usinage (3) de la machine d'usinage.

3. Dispositif tendeur selon la revendication 1 ou 2, **caractérisé en ce que** la surface de serrage (12) de la mâchoire de serrage intérieur (11, 11') s'étend parallèlement à la surface d'assemblage (8, 9).

4. Dispositif tendeur selon l'une quelconque des revendications précitées, **caractérisé en ce que** la fente de passage (17) est élargie en cône dans le sens inverse du faisceau d'usinage (3) de la machine d'usinage.

5. Dispositif tendeur selon l'une quelconque des revendications précitées, **caractérisé en ce que** la forme des entretoises de liaison (15, 15') est adaptée à la caustique du faisceau d'usinage (3).

6. Dispositif tendeur selon l'une quelconque des revendications précitées, **caractérisé en ce que** la tête tendeuse (16) est pourvue d'une mâchoire de serrage extérieur (27) disposée en dehors de la course du faisceau rotative (10) de la machine d'usinage, avec une surface de serrage (28) pour le serrage extérieur des éléments (6, 7).

7. Dispositif tendeur selon l'une quelconque des revendications précitées, **caractérisé en ce que** les mâchoires de serrage intérieur et/ou extérieur (11, 11', 27) sont constituées de plusieurs parties.

8. Dispositif tendeur selon l'une quelconque des revendications précitées, **caractérisé en ce que** les entretoises de liaison (15) sont réalisées pour le support de la mâchoire de serrage intérieur (11) sur deux rubans de tôle métallique (23, 23') se croisant, insérés dans la mâchoire de serrage intérieur (11).

9. Dispositif tendeur au moins selon la revendication 1, **caractérisé en ce qu'**en particulier pour tendre des éléments en trois dimensions, une pluralité de mâchoires de serrage intérieur individuelles (11') est montée respectivement sur des têtes tendeuses (16') individuelles extérieures par le biais des entretoises de liaison (15').

10. Dispositif tendeur selon la revendication 9, **caractérisé en ce que** les têtes tendeuses (16') présentent chacune des leviers de serrage (29) maintenant les entretoises de liaison (15'), qui peuvent être sollicités au moyen d'un entraînement de tension, de préférence au moyen d'un entraînement à piston et cylindre (34).
